# EUROPEAN PATENT APPLICATION

(11) **EP 2 343 676 A2**
(43) Date of publication of application: **13.07.2011**
(21) Application number: 10193310.9
(22) Date of filing: 01.12.2010
(51) Int. Cl.: G06Q 10/00, G06Q 20/00

(54) **Degree of fraud calculating device, control method for a degree of fraud calculating device, and store surveillance system**

(30) Priority: 02.12.2009 JP 2009274445
(71) Applicant: Seiko Epson Corporation, Tokyo 163 (JP)
(72) Inventor: Aonuma Masashi, Nagano 392-8502 (JP); Nakamura, Jinichi, Nagano 392-8502 (JP); Hama, Takashi, Nagano 392-8502 (JP); Yoshizawa, Junichi, Nagano 392-8502 (JP)
(74) Representative: MERH-IP Matias Erny Reichl Hoffmann

(57) **Abstract**

A degree of fraud calculating device, a control method for a degree of fraud calculating device, and a store surveillance system can detect fraudulent activity with a high degree of accuracy. A fraud pattern storage unit 71 that stores a fraud pattern, which sets a basic score that is a weight factor for one or more elements of fraud anticipated in the store; a fraud detection unit 72 that detects if one or more the fraud elements occur; a degree of fraud calculating unit 73 that calculates a degree of fraud by summing the basic scores of the fraud elements detected by the fraud detection unit to have occurred; and a degree of fraud recorder 74 that records the calculated results output by the degree of fraud calculator 73 in a fraud database 23.

## Description

### BACKGROUND

### 1. Technical Field

The present invention relates to a degree of fraud calculating device for detecting fraudulent activity by employees or customers in retail and food service businesses such as supermarkets and restaurants, to a control method for a degree of fraud calculating device, and to a store surveillance system.

### 2. Related Art

Japanese Unexamined Patent Appl. Pub. JP-A-2005-115504 teaches a system for detecting fraudulent activity by employees during transaction processes in retail stores and the food service industry. The system taught in JP-A-2005-115504 includes a point-of-sale terminal (POS terminal), a camera that images the area around the POS terminal, a photojournal recorder, and a detection terminal. A photojournal recorder stores records containing journal data (transaction history data), the image data of the area around the POS terminal captured by the camera, and the POS terminal operations executed by the employee (operating history data). Using a search terminal, an administrator can specify particular search conditions, such as the time or POS terminal operations, to display the journal data and image data matching the search conditions on a display.

The system taught in JP-A-2005-115504 only displays a list of the data records (transaction process content and the time the image data was captured) that match the search conditions specified by the administrator, and in order to detect fraudulent activity in a transaction process the administrator must individually check each data record. This means that some fraudulent activity may go undetected because of the large number of data records that must be checked. A problem with such systems according to the related art is thus that all instances of fraudulent activity cannot be reliably detected.
The methods used to commit fraud have also become more varied and more complex, and accurately determining whether or not fraud occurred based only on the captured images of activity around POS terminals is not possible. It is therefore necessary to determine if fraud occurred based on a number of possible elements of fraud (fraud elements) such as activity near a POS terminal, employee behavior, and the content of the transaction process, but a system that detects fraudulent activity based on the correlation between multiple fraud elements has yet to be proposed.

### SUMMARY

A degree of fraud calculating device, a control method for a degree of fraud calculating device, and a store surveillance system according to the present invention enable detecting fraudulent activity with a high degree of reliablity.

A first aspect of the invention is a degree of fraud calculating device that is connected to a POS terminal that executes a transaction process in a store, including: a fraud pattern storage unit that stores a fraud pattern, which sets a basic score that is a weight factor for one or more elements of fraud anticipated in the store; a fraud detection unit that detects if one or more said fraud elements occur; and a degree of fraud calculating unit that calculates a degree of fraud by summing the basic scores of the fraud elements detected by the fraud detection unit to have occurred.

Another aspect of the invention is a control method of a degree of fraud calculating device that is connected to a POS terminal that executes a transaction process in a store, and has an internal or external fraud pattern storage unit that stores a fraud pattern, which sets a basic score that is a weight factor for one or more elements of fraud anticipated in the store, the control method including as steps executed by the degree of fraud calculating device: a fraud detection step that detects if one or more said fraud elements occur; and a degree of fraud calculating step that calculates a degree of fraud by summing the basic scores of the fraud elements detected to have occurred.

This aspect of the invention calculates a degree of fraud (a value indicating the likelihood that fraud occurred) by summing the basic scores of the one or more fraud elements detected to have occurred, and thereby enables a user (such as an administrator) to know the possibility of fraud from the calculated result. As a result, fraudulent activity can be more accurately detected even when the method of committing the fraud is complex.
Note that fraud elements include at least one of the following elements: operation of a specific key of the transaction processing unit; a mismatch between the receipt content (product information) read in the exception process and the original sale process; a mismatch between the customers in the exception process and the sale process; non-detection of specific spoken keywords in the exception process; change in the open or closed state of the cash drawer; entry of an employee to a specific area; execution of a transaction process when a person other than the operator of the transaction processing unit is not at the checkout counter; suspicious activity by an employee; or change in a physiological signal from the employee.
Other aspects of the invention may also have a degree of fraud output means (degree of fraud output step) that outputs the result calculated by the degree of fraud calculating means (degree of fraud calculating step), or a fraud evaluation means (fraud evaluation step) that determines if fraudulent activity occurred based on the calculated result from the degree of fraud calculating means (degree of fraud calculating step).

In a degree of fraud calculating device according to another aspect of the invention the fraud detection unit preferably detects an applicability rate for at least part of the fraud elements detected to have occurred; and the degree of fraud calculating unit calculates an irregularity value for each fraud element detected by the fraud detection unit by multiplying the basic score of the fraud element by the applicability rate, and calculates the degree of fraud by summing the irregularity values.

In a control method of a degree of fraud calculating device according to another aspect of the invention, the fraud detection step preferably detects an applicability rate for at least part of the fraud elements detected to have occurred; and the degree of fraud calculating step calculates an irregularity value for each fraud element detected by the fraud detection unit by multiplying the basic score of the fraud element by the applicability rate, and calculates the degree of fraud by summing the irregularity values.

These aspects of the invention enable calculating the degree of fraud with consideration for the applicability rates of the fraud elements. For example, an applicability rate that allows for some discretion instead of a simple binary yes/no determination can be detected depending upon the fraud element, such as fraud elements that require speech recognition or image recognition for detection. By thus considering the applicability rate, a more accurate degree of fraud can be calculated.

Further preferably in a degree of fraud calculating device according to another aspect of the invention, the fraud pattern defines an order of occurrence for at least part of the one or more fraud elements; the fraud detection unit detects the order of occurrence of the fraud elements; and the degree of fraud calculating unit calculates the degree of fraud by adding a specific match addend to the total of the irregularity values when the order of occurrence defined in the fraud pattern matches the order of occurrence detected by the fraud detection unit.

Further preferably in a control method of a degree of fraud calculating device according to another aspect of the invention, the fraud pattern defines an order of occurrence for at least part of the one or more fraud elements; the fraud detection step detects the order of occurrence of the fraud elements detected to have occurred; and the degree of fraud calculating step calculates the degree of fraud by adding a specific match addend to the total of the irregularity values when the order of occurrence defined in the fraud pattern matches the order of occurrence detected in the fraud detection step.

With these aspects of the invention the order in which the fraud elements occur can be considered in order to calculate the degree of fraud. For example, even when all fraud elements defined in a fraud pattern are detected to have occurred, the fraudulent activity defined by the fraud pattern may not have occurred if the order of occurrence differs from the defined order. Conversely, if the order of occurrence of the fraud elements defined in the fraud pattern matches the actual order of occurrence, there is an extremely strong possibility that the fraudulent activity defined by the fraud pattern occurred. A more accurate degree of fraud can therefore be calculated by considering the order of occurrence.

A degree of fraud calculating device according to another aspect of the invention preferably also has a warning unit that issues a warning when the degree of fraud calculated by the degree of fraud calculating unit exceeds a specified value.

Because this aspect of the invention issues a warning when the possibility that fraud occurred is high, an employee or administrator (such as a manager or the head of the store) can be notified accordingly.

Further preferably in a degree of fraud calculating device according to another aspect of the invention, the fraud pattern storage unit stores a plurality of fraud patterns; the degree of fraud calculating unit calculates a degree of fraud for plural fraud patterns stored in the fraud pattern storage unit; and the warning unit issues a warning when there is at least one fraud pattern for which the degree of fraud calculated by the degree of fraud calculating unit exceeds a specified value.

When there are plural possible methods of committing fraud, this aspect of the invention enables verifying all methods because plural fraud patterns are stored and the degree of fraud is calculated for each. In other words, increasing the number of fraud patterns enables flexibly adapting to increasingly diverse and complex methods of fraud.

A degree of fraud calculating device according to another aspect of the invention further preferably also has an exception process detection unit that detects execution of an exception process, which is a type of transaction process, by the transaction processing unit of the POS terminal based on transaction information from the POS terminal or POS terminal operating information from a data hook driver, and the degree of fraud calculating unit functions conditionally upon the exception process detection unit detecting an exception process.

The type of fraudulent activity detected by the invention generally occurs in conjunction with an exception process. Because this aspect of the invention calculates the degree of fraud only when an exception process is executed, fraudulent activity can be detected efficiently.

Further preferably in a degree of fraud calculating device according to another aspect of the invention, the exception process includes at least one process selected from a group of processes including an interrupt process for canceling input data during transaction processing by the transaction processing unit, a cancellation process for canceling a transaction after the transaction process was completed, a return process for returning a product, a markdown process for marking down a product price,a discount process for discounting a product by a percentage, a change process for making cash change, an inspection process for comparing cash in the cash drawer with sales data, a payment/refund process for paying or returning money, and a reissue process for re-issuing a receipt.

This aspect of the invention enable detecting fraudulent activity accompanying an interrupt process, a cancellation process, a return process, a markdown process, a discount process, a change process, an inspection process, a payment/refund process, and a reissue process.

Further preferably in a degree of fraud calculating device according to another aspect of the invention, the exception process detection unit detects the type of exception process; the fraud pattern storage unit stores a fraud pattern for each exception process type; and the degree of fraud calculating unit extracts the fraud pattern corresponding to the exception process type detected by the exception process detection unit from the fraud pattern storage unit, and calculates a degree of fraud.

Because a fraud pattern is stored for each type of exception process, this aspect of the invention enables more accurately calculating the degree of fraud using a fraud pattern appropriate to the type of exception process.

Further preferably in a degree of fraud calculating device according to another aspect of the invention, the warning unit changes at least one of the warning recipient and the warning method according to the type of exception process detected by the exception process detection unit.

This aspect of the invention enables issuing a warning using a warning format (warning recipient and warning method) suitable to the type of exception process. In addition, because the warning format changes according to the type of exception process, the employee or administrator can easily surmise the method of the detected fraudulent activity.

A degree of fraud calculating device according to another aspect of the invention preferably also has a degree of fraud recording unit that records the results calculated by the degree of fraud calculating unit in a database.

By recording the results of the calculated degrees of fraud, this aspect of the invention can determine from the stored records if fraudulent activity occurred. In addition, the stored records can be used as proof of the fraudulent activity.

Another aspect of the invention is a store surveillance system having a POS terminal that executes a transaction process in a store, and a degree of fraud calculating device that is connected to the POS terminal and includes a receipt printer that detects if an exception process is executed and issues a receipt based on transaction information from the POS terminal or POS terminal operating information from a data hook driver, and a store management server that is connected to the receipt printer and calculates a degree of fraud based on detection of an exception process.

Further preferably in a store surveillance system according to another aspect of the invention, the store management server has: a fraud pattern storage unit that stores a fraud pattern, which sets a basic score that is a weight factor for one or more elements of fraud anticipated in the store; a fraud detection unit that detects if one or more said fraud elements occur; and a degree of fraud calculating unit that calculates a degree of fraud by summing the basic scores of the fraud elements detected by the fraud detection unit to have occurred.
Other objects and attainments together with a fuller understanding of the invention will become apparent and appreciated by referring to the following description and claims taken in conjunction with the accompanying drawings.

### BRIEF DESCRIPTION OF THE DRAWINGS

FIG. 1 is a block diagram of a store surveillance system according to a first embodiment of the invention.
FIG. 2 is a function block diagram of the store surveillance system according to the first embodiment of the invention.
FIG. 3 shows an example of a fraud pattern table.
FIG. 4 describes the content recorded in a fraud database.
FIG. 5 shows the structure of fraud elements.
FIG. 6 shows a specific example of fraud elements.
FIG. 7 shows an example of an order of events definition for fraud pattern A1.
FIG. 8 shows an example of the detection results for fraud pattern A1.
FIG. 9 is a flow chart of the degree of fraud recording process of the store surveillance system.
FIG. 10 is a function block diagram of a store surveillance system according to a second embodiment of the invention.
FIG. 11 shows an example of a degree of fraud history.
FIG. 12 shows an example of an order of events definition for fraud pattern A2.
FIG. 13 shows an example of the detection results for fraud pattern A2.
FIG. 14 is a flow chart showing part of the degree of fraud recording process of the store surveillance system according to the second embodiment of the invention.

### DESCRIPTION OF EMBODIMENTS

Preferred embodiments of a degree of fraud calculating device, a control method for a degree of fraud calculating device, and a store surveillance system according to the present invention are described below with reference to the accompanying figures. The degree of fraud calculating device according to the invention is described below when used in a store surveillance system. The store surveillance system is deployed in a supermarket or other type of retail store to detect fraudulent activity by employees or customers.

### * Embodiment 1

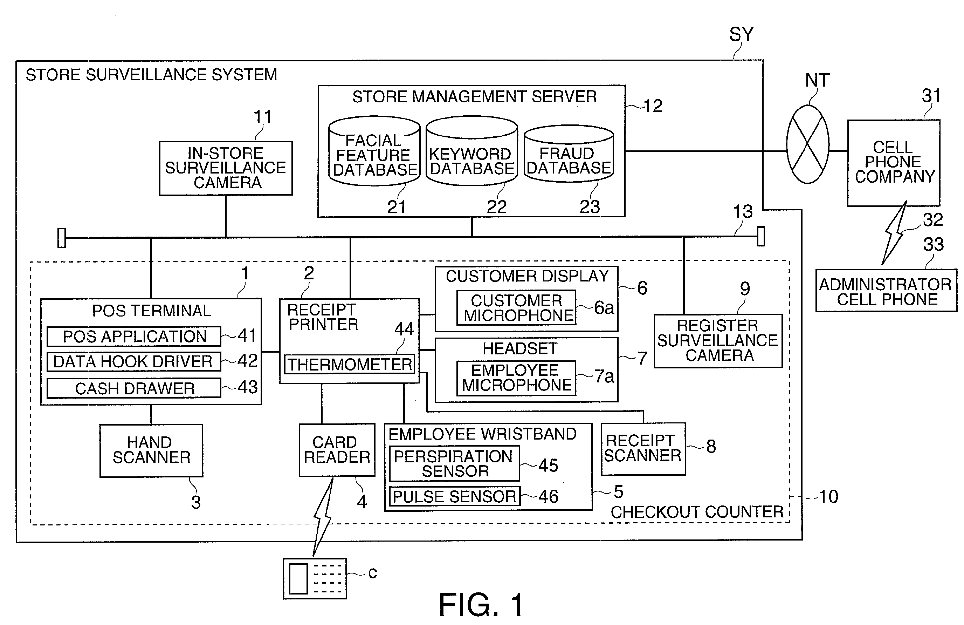

FIG. 1 is a block diagram of a store surveillance system SY according to the first embodiment of the invention. As shown in FIG. 1, the store surveillance system SY includes a POS terminal 1 that executes a transaction process, a receipt printer 2 that prints receipts (not shown in the figure), a hand scanner 3 that reads barcodes affixed to or printed on products, a card reader 4 that contactlessly reads an employee card C, an employee wristband 5 that is worn on the wrist by the employee (operator), a customer display 6 that displays product information, a headset 7 worn on the head by the employee, a receipt scanner 8 that reads receipts, a register surveillance camera 9 that surveils the checkout counter area, an in-store surveillance camera 11 that monitors the store interior, and a store management server 12 that controls the store surveillance system SY.
The POS terminal 1 is connected to the receipt printer 2 and hand scanner 3, and the receipt printer 2 is connected to the card reader 4, employee wristband 5, customer display 6, headset 7, and receipt scanner 8, by a serial interface (such as a USB (Universal Serial Bus) interface) or a wireless LAN. The POS terminal 1, receipt printer 2, register surveillance camera 9, in-store surveillance camera 11, and store management server 12 are connected by means of an in-house LAN 13 (a wired or a wireless LAN).

The store management server 12 is connected to a cell phone company 31 through the Internet or other network NT. The administrator cell phone 33 shown in the figure is used by an administrator (such as a manager or store manager) with specific authority in the store, and enables speaking with an employee wearing the headset 7 through a telephone line 32 or cell phone company 31. The administrator cell phone 33 has an e-mail function, and can receive e-mail (warning messages) sent from the store management server 12.

Note that while only one POS terminal 1 is shown in FIG. 1, a POS terminal 1 and related devices are provided for each checkout counter 10 when there are plural checkout counters 10 in the store. Of the elements in the store surveillance system SY described above, the degree of fraud calculating device is rendered by the receipt printer 2 and the store management server 12.

The POS terminal 1 is installed at a checkout counter 10, and includes a POS application 41 for executing a transaction process, a data hook driver 42 that outputs the result of POS terminal 1 operations to the receipt printer 2, and a cash drawer 43 that stores cash. Although not shown in the figure, the POS terminal 1 also includes other components of a common cash register. The hand scanner 3 reads product barcodes containing a product code, for example, and outputs the result to the POS terminal 1.

The card reader 4 reads an employee ID from an employee card C containing a wireless IC chip (such as an RFID (radio frequency identification) chip). Each store employee is required to wear an employee card C. The employee wristband 5 includes a perspiration sensor 45 that measures the sweat and a pulse sensor 46 that measures the pulse of the person wearing the employee wristband 5. The employee operating the POS terminal 1 at the checkout counter 10 is required to wear an employee wristband 5.

In addition to the general functions of a customer display that displays product name and product price information for the customer, the customer display 6 also has a function that captures customer speech by means of a customer microphone 6a. The customer microphone 6a is a small condenser microphone, and is disposed in an outside edge part of the customer display 6 facing the customer. The headset 7 includes an employee microphone 7a and a headphone (not shown in the figure). The employee operating the POS terminal 1 is required to wear a headset 7.
The receipt scanner 8 reads a receipt to determine if the receipt is authentic.

The receipt printer 2 has a function for issuing receipts based on transaction information output from the POS terminal 1, and a function for measuring the temperature behind the checkout counter 10 by means of a thermometer 44. The receipt printer 2 receives information input from serially connected peripheral devices, and outputs to the store management server 12. By thus routing data input and output through the receipt printer 2 (more specifically, by using the receipt printer 2 to filter acquired information and output the necessary information), adversely effecting traffic on the POS backbone network (the network to which the POS terminal 1 is central) can be prevented. The invention can also be introduced to existing POS systems without needing to change the POS backbone network.

The register surveillance camera 9 is installed on the ceiling above the checkout counter 10, for example, and records images of the area behind the checkout counter 10 (the employee and area around the POS terminal 1), the top of the checkout counter 10 (including the products involved in the transaction and the exchange of money, for example), and the area in front of the checkout counter 10 (including the customer). Plural in-store surveillance cameras 11 are installed throughout the store, and monitor the entry and exit of employees to specific areas and specific rooms. A CCD camera or PTZ (pan-tilt-zoom) camera, for example, can be used as the register surveillance camera 9 and in-store surveillance camera 11.

The store management server 12 stores a facial feature database 21 containing the facial features of individual employees, a keyword database 22 containing keywords of employee and customer speech used during a transaction process, and a fraud database 23 for recording the degree of fraud calculated for employees and customers. The store management server 12 calculates a degree of fraud for an employee or customer and stores the calculated degree of fraud values in the fraud database 23 based on store conditions detected by the devices described above and the results of searching the facial feature database 21 and keyword database 22. When the calculated degree of fraud exceeds a specific value, the store management server 12 issues a warning to the operator or manager.

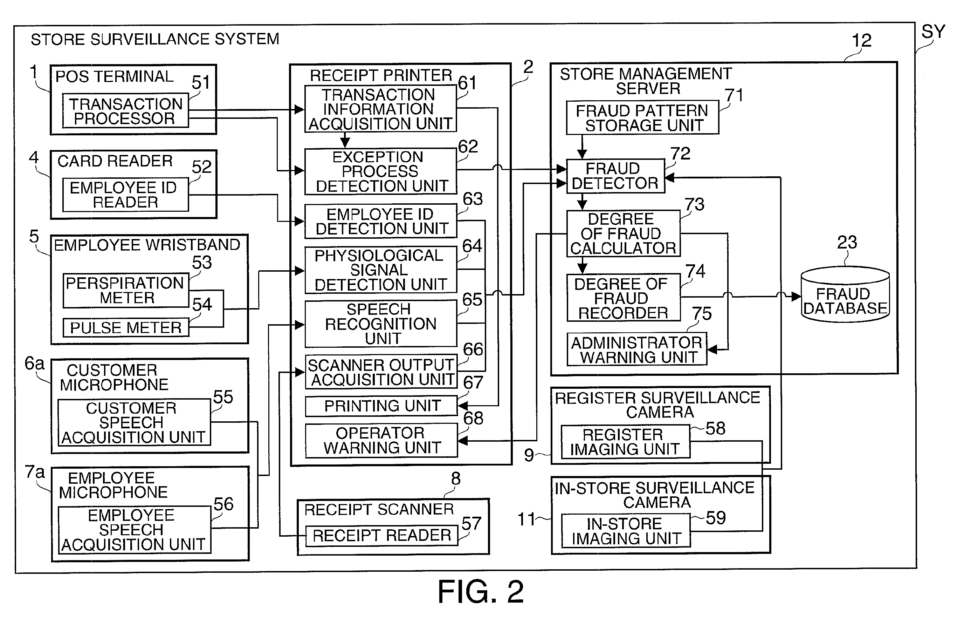

The functional configuration of the store surveillance system SY is described next with reference to FIG. 2. The main functional unit of the POS terminal 1 is a transaction processor 51. The main part of the transaction processor 51 is the POS application 41, and processes transactions including normal sales transactions and exception processes. The results of these processes are output as transaction information to the receipt printer 2.

In this embodiment of the invention an exception process refers to a specific process that has a high probability of being exploited for fraudulent activity. These exception processes include a return process that is executed when a product is returned; a register error process (cancellation process) that is executed to cancel a particular transaction after the transaction process was completed; a markdown process for marking down a product price; a discount process for discounting a product by a percentage; an interrupt process for canceling input data during a transaction process; a change process for making change; an inspection process for comparing money in the cash drawer 43 with the sales data; a payment/refund process for paying or returning money; and a reissue process for re-issuing a receipt. Each of these processes is considered a type of exception process.

The main functional component of the card reader 4 is an employee ID reader 52. The employee ID reader 52 communicates with the employee card C by near field communication, and reads the employee ID from an employee card C near the checkout counter 10.
The main functional components of the employee wristband 5 are a perspiration meter 53 and pulse meter 54. The perspiration meter 53 is rendered by the perspiration sensor 45, and the pulse meter 54 is rendered by the pulse sensor 46.

The customer microphone 6a disposed to the customer display 6 has a customer speech acquisition unit 55 as the main functional component. The customer speech acquisition unit 55 acquires a customer speech signal and outputs to the receipt printer 2.
The employee microphone 7a disposed to the headset 7 has a employee speech acquisition unit 56 as the main functional component. The employee speech acquisition unit 56 acquires an employee speech signal and outputs to the receipt printer 2.

The receipt scanner 8 has a receipt reader 57 as the main functional component. The receipt reader 57 reads a receipt and acquires the product information (transaction number, receipt date, product name, quantity, price, and sales total information) printed on the receipt.
The main functional component of the register surveillance camera 9 is a register imaging unit 58. The register imaging unit 58 images the area around the checkout counter 10 and outputs the captured images to the store management server 12.
The in-store surveillance camera 11 has a in-store imaging unit 59 as the main functional component. The in-store imaging unit 59 captures images of the store interior including the actions (movements) of employees and customers in the store, and outputs the result to the store management server 12.

The main functional components of the receipt printer 2 include a transaction information acquisition unit 61, exception process detection unit 62, employee ID detection unit 63, physiological signal detection unit 64, speech recognition unit 65, scanner output acquisition unit 66, printing unit 67, and operator warning unit 68. The transaction information acquisition unit 61 acquires transaction information output from the POS terminal 1 (transaction processor 51).

The exception process detection unit 62 detects when an exception process is called by the transaction processor 51 and the type of exception process based on the transaction information acquired by the transaction information acquisition unit 61 and the detection result from the data hook driver 42. The degree of fraud calculator 73, degree of fraud recorder 74, operator warning unit 68, and administrator warning unit 75 described below operate conditionally upon the exception process detection unit 62 detecting an exception process.

The employee ID detection unit 63 detects an employee ID from the output of the employee ID reader 52, and outputs the detected employee ID to the fraud detector 72 (described below). The number of employees around the checkout counter 10 can be determined from the number of detected employee IDs, and the employee operating the POS terminal 1 can be detected from the detected employee ID. Note that the employee ID detection unit 63 may be rendered by a plurality of card readers 4 with directivity. This configuration enables clearly separating the employee processing a transaction from other employees.

The physiological signal detection unit 64 detects a physiological signal, which is the result output by the perspiration meter 53 and pulse meter 54, and outputs the detected results to the fraud detector 72.
The speech recognition unit 65 acquires speech data from the customer speech acquisition unit 55 and employee speech acquisition unit 56, and recognizes the speech. The speech recognition unit 65 has two dedicated recognition units for separately recognizing customer speech and employee speech, and each dedicated recognition unit includes a sound analyzer, sound model, language model, word dictionary, and text conversion unit (all not shown in the figures). Using these components, each dedicated recognition unit converts the acquired speech signals to text data. The text data is output to the fraud detector 72.

The scanner output acquisition unit 66 detects product information, which is the read output from the receipt reader 57, and outputs the detected result to the fraud detector 72.
The printing unit 67 prints the transaction information acquired by the transaction information acquisition unit 61 on receipt paper and issues a receipt.
When a degree of fraud exceeding a specified value is calculated by the degree of fraud calculator 73 (described below), the operator warning unit 68 outputs a warning to the operator that the possibility of fraudulent activity is high. This warning may be output by displaying a message on the operator display (not shown in the figure), audibly, by causing an LED to light or flash, or by causing a vibrator to vibrate.

The store management server 12 has a fraud pattern storage unit 71, a fraud detector 72, a degree of fraud calculator 73, a degree of fraud recorder 74, and an administrator warning unit 75 as the main functional components.
The fraud pattern storage unit 71 stores fraud patterns defined by one or more elements of fraud (fraud elements) that may occur in the store.
Note that these fraud elements include, for example, operation of a specific key of the transaction processor 51; a mismatch between the receipt content (product information) read in the exception process and the original sale process; a mismatch between the customers in the exception process and the sale process; non-detection of specific spoken keywords in the exception process; change in the open or closed state of the cash drawer 43; entry of an employee to a specific area (such as a changing room); execution of a transaction process when a customer or an employee other than the operator is not at the checkout counter 10; suspicious activity by an employee (such as looking around furtively); or a change in a physiological signal from the employee.

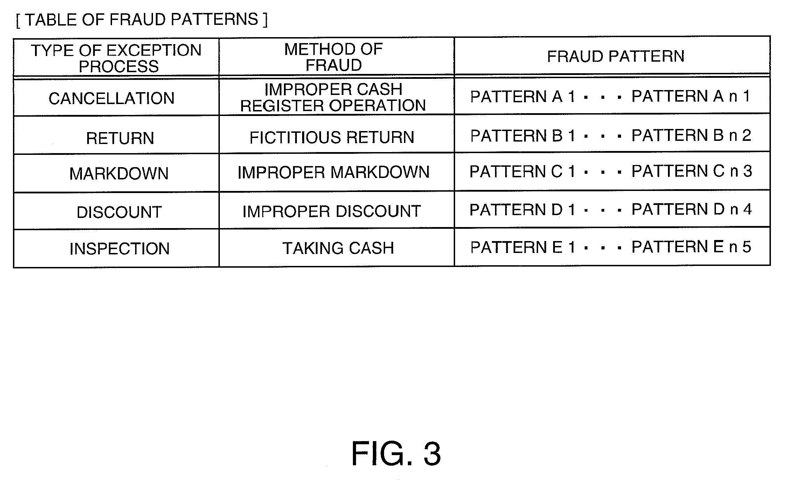

As shown in FIG. 3, the fraud patterns are grouped and stored by the type of exception process. In the table of fraud patterns shown in FIG. 3, the "method of fraud" describes the method of fraud that is anticipated when a particular type of exception process is executed. While there is a 1:1 relationship between type of exception process and method of fraud in the figure, there may be an N:1 or a 1:N relationship. As shown in the fraud pattern field, plural fraud patterns may be related to each transaction process type.

The fraud detector 72 detects whether or not the fraud elements defined for each fraud pattern have occurred. The fraud detector 72 also detects the applicability rates of the detected fraud elements as needed. As further described below, this applicability rate is a value greater than 0% and less than 100% where occurrence (detection) of a fraud element is 100% and non-occurrence (non-detection) is 0%. The degree of fraud calculator 73 extracts the fraud patterns corresponding to the type of exception process detected by the exception process detection unit 62 from the fraud pattern storage unit 71, and calculates the degree of fraud with reference to the fraud pattern. More specifically, the degree of fraud calculator 73 sums the basic scores of the fraud elements detected by the fraud detector 72 from among the group of fraud elements described in the fraud pattern to calculate the degree of fraud.
Note that for each of the fraud elements for which the applicability rate was detected by the fraud detector 72, the corresponding basic score is multiplied by the applicability rate and the resulting product is used as the irregularity value. This is described in further detail below.
The degree of fraud recorder 74 records the result calculated by the degree of fraud calculator 73 in the fraud database 23.

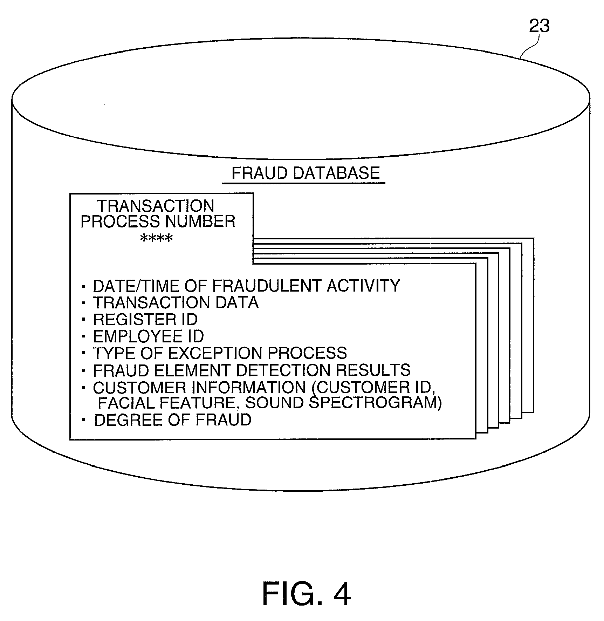

As shown in FIG. 4, various information is stored in the fraud database 23 with each transaction process (transaction number). More specifically, the time and date of the fraud, transaction data, the cash register ID (the ID of the POS terminal 1), checkout clerk ID (employee ID), type of exception process, detected fraud elements (situation data), customer information, and degree of fraud are recorded.
Note that in addition to a customer ID captured by the use of a membership card, credit card, or electronic money, for example, the customer information as used here also includes physiological information such as facial features acquired from images captured by the register surveillance camera 9, or a sound spectrogram acquired from the audio signal captured from the customer microphone 6a. In addition, the type of exception process denotes the result from the exception process detection unit 62, and the degree of fraud denotes the calculated output of the degree of fraud calculator 73.

The administrator warning unit 75 issues a warning to the administrator when the degree of fraud calculated by the degree of fraud calculator 73 exceeds a specific value. In this embodiment of the invention the administrator warning unit 75 sends a warning message by e-mail to the administrator cell phone 33. The items recorded in the fraud database 23 described above are included in this e-mail. The administrator cell phone 33 (administrator) can also preferably communicate with the headset 7 (employee) after receiving the e-mail. This configuration enables the administrator to directly confirm the conditions of the transaction with the operator and take appropriate action in response to the fraud. If a PTZ camera is used as the register surveillance camera 9, the administrator cell phone 33 can preferably be used to change the orientation and zoom ratio of the register surveillance camera 9. This enables checking the situation at the checkout counter 10 without involving the operator. The method of warning the administrator is not limited to e-mail, and a Web application or mobile terminal connected to the in-house LAN may be used. By using e-mail or a Web application, the alarm content can be reliably communicated to the administrator regardless of the administrator's location. In addition, while use of a mobile terminal may be limited to a certain location or range, communication costs can be reduced.

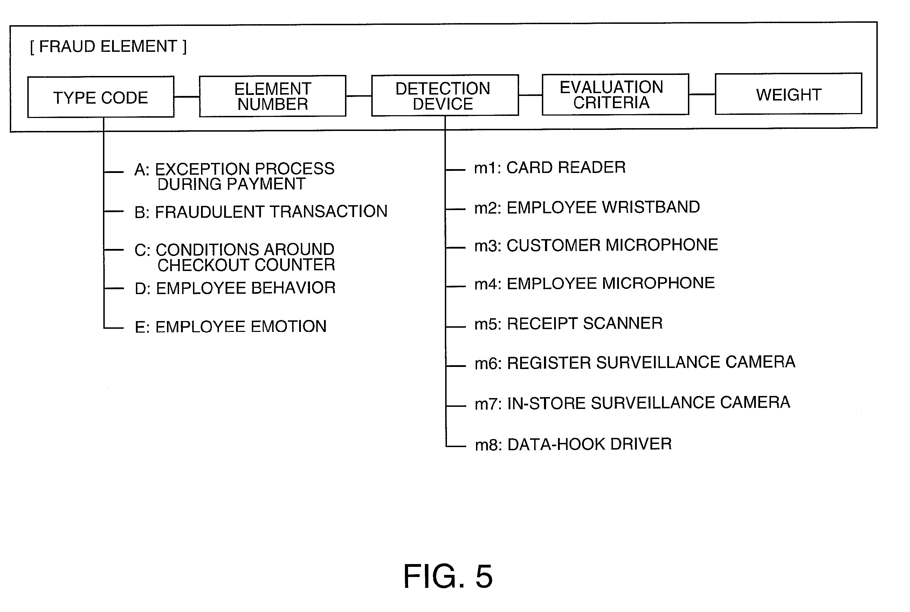

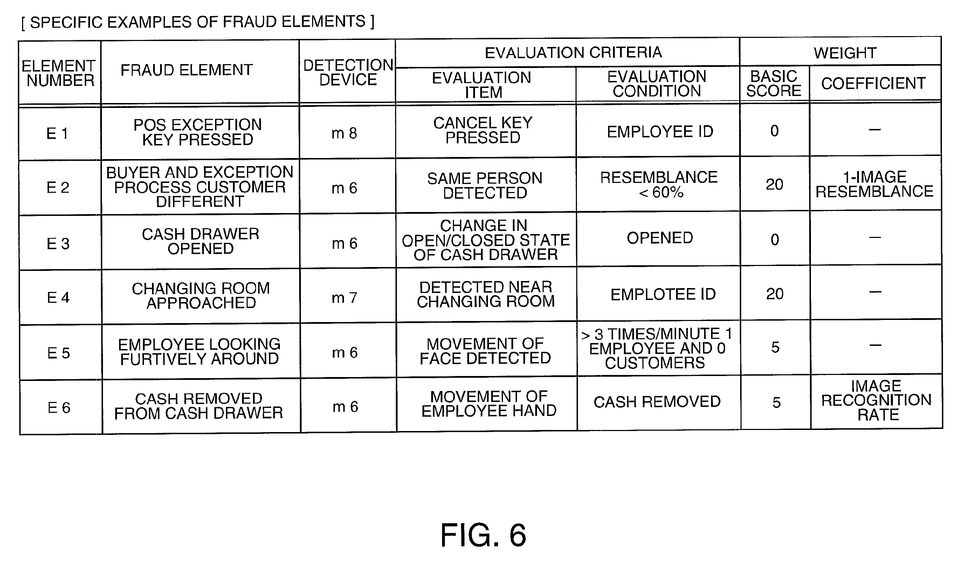

The structure of the fraud elements is described next with reference to FIG. 5. As described above, the fraud elements are defined in the fraud patterns, but the user can define the specific details using an operating unit (not shown in the figure) disposed to the receipt printer 2 or store management server 12. As shown in the figure, the fraud elements include a type identifier, an element number, the detection device, evaluation criteria, and weight.
The type identifier is information identifying the group to which a fraud element belongs when the fraud elements are categorized into multiple groups, and in the example shown in the figure is a letter from "a" to "e." The user can use the type identifier to search for fraud elements that should be included in a fraud pattern.
The element number is information uniquely identifying each fraud element.
The detection device is the device that detects a particular fraud element, and in the example shown in the figure is identified by a value from m1 to m8.
While described in further detail in FIG. 6, the evaluation criteria denotes an evaluation item and evaluation criteria.
The weight denotes the basic score assigned to the fraud element and a coefficient for calculating the applicability rate.

Note that plural detection devices can be linked to fraud elements that can be detected by plural detection devices. For example, if the fraud element is content limiting the number of employees around the checkout counter 10, the number of employees can be detected by the card reader 4 (m1) and register surveillance camera 9 (m6), and the fraud element can be linked to those two detection devices.
The user can also set the evaluation criteria and weight as desired.

Specific examples of fraud elements are described next with reference to FIG. 6. For example, the fraud element identified by element number E1 is detected by the data hook driver 42 (FIG. 1) (m8) of the POS terminal 1, and when the cancel key of the POS terminal 1 is detected to have been pressed by the operating information output from the data hook driver 42, the fraud detector 72 determines that a POS exception key event (that is, that a POS exception key was pressed) occurred. In this situation the employee ID of the operator is detected using the data hook driver 42 or card reader 4, and the employee ID is stored in the fraud database 23 with the detection results. Note that a POS exception key event may be detected from the transaction information output from the POS terminal 1, the print data for printing a receipt, or the display data for displaying content on the customer display 6 instead of using the data hook driver 42.

The fraud element of element number E2 is detected by the register surveillance camera 9 (m6). When the person requesting an exception process is compared with the original buyer and the resemblance therebetween is 60% or less, the fraud detector 72 determines that the fraud element E2 occurred because the original buyer and the exception process customer are different. As shown in the figure, because the basic score is 20 and the coefficient is (1- image resemblance), when the image resemblance is 20%, the applicability rate (the probability that the condition "original buyer and exception process customer are different" is true) is 80%, and the irregularity value (= basic score x applicability rate) is 16.
Whether or not the original buyer and the exception process customer are the same is determined based on the facial features of the customer stored in the fraud database 23 with each transaction process (see FIG. 4). More specifically, facial features of the customer requesting an exception process (the customer in the exception process) are compared with facial features of the customer that made the original purchase (at the time of the scanning process) to determine the resemblance therebetween. Note that these facial features are calculated by normalizing the image of the face extracted by analyzing the image captured by the register surveillance camera 9.

Other fraud elements are similarly defined as shown in the figure.
Briefly, element number E3, element number E5, and element number E6 are detected by detecting areas of motion in the video captured by the register surveillance camera 9 (m6), and detecting faces and hands, opening and closing of the cash drawer, and movement of cash in the motion areas. Element number E5 is determined to have occurred when the number of employees at the checkout counter 10 is 1 and the number of customers is 0 based on output from the card reader 4 and the surveillance images from the register surveillance camera 9.

Element number E4 is detected when facial features resembling the facial features of the operator (the facial features linked to the employee ID of the operator in the facial feature database 21) are detected in the images captured by a in-store surveillance camera 11 located near the entrance to a changing room. Element number E4 may also be detected by installing a card reader 4 near the changing room entrance and reading the employee card C by means of the card reader 4 to detect the employee ID.

Furthermore, while only the six fraud elements E1 to E6 are shown in FIG. 6 as examples, other elements such as described below can also be added as fraud elements.
For example, the presence of an exception process customer that is in front of the checkout counter without saying anything may be detected from the audio captured by the customer microphone 6a (m3). Because the customer will usually say something like "there is a mistake on the receipt" when an exception process is called, silence can be interpreted to indicate that the possibility of fraud is high. In this situation a person standing silently in front of the checkout counter can be determined by failure to recognize a particular keyword such as "mistake" from the captured speech. Note that these keywords can be defined by selecting one or more keywords from the keyword database 22 (see FIG. 1). An employee operating the cash register without saying anything can similarly be detected from the audio captured by the employee microphone 7a (m3).

Note, further, that the customer microphone 6a for collecting customer speech and the employee microphone 7a for collecting employee speech may be combined in a single microphone instead of separate microphones. In this configuration an employee sound spectrogram storage unit (not shown in the figure) that stores sound spectrograms for each employee may be disposed in the receipt printer 2 or store management server 12. The speech recognition unit 65 differentiates employee speech from customer speech by comparing the sound spectrogram of the acquired audio with the sound spectrograms stored in the employee sound spectrogram storage unit to detect a match. With this configuration there is no need to provide separate microphones for employees and customers, and the cost of the store surveillance system SY can be reduced accordingly.

A significant difference between the original data and the processed data when an exception occurs may also be detected as a fraud element based on the output of the receipt scanner 8 (m5) because this corresponds to fraud committed by returning a product using a forged receipt. Whether such an event has occurred or not and the applicability rate can be detected in this situation by comparing the product information (the items on the receipt) captured at the time of purchase and the product information read from the receipt when the exception process was requested.

The presence of only one employee around the checkout counter may also be detected as a fraud element based on the output from the card reader 4 (m1). This is because such fraud normally occurs only when another employee is not nearby. This event can be detected to have occurred when the number of employee IDs acquired by the card reader 4 is 1 or less.
That a customer is not in front of the checkout counter can also be detected as a fraud element from the images captured by the register surveillance camera 9 directed at the checkout counter. This event is determined to have occurred or not according to whether or not a face is detected in the images output from the register surveillance camera 9.

An employee sweating may also be detected as a fraud element based on the output of the perspiration sensor 45 (m2). This is because there is usually a change in a physiological signal detected from the employee when attempting to commit fraud. Such an event can be detected from an increase in the perspiration level of the employee before and after the exception process. However, if a notable difference in the air temperature before and after the exception process is detected from the thermometer 44 (such as when the temperature suddenly rises), the applicability rate is preferably determined with consideration for the temperature difference (a coefficient based on the temperature difference).
A rapid pulse may also be detected as a fraud element based on the output of the pulse sensor 46 (m2) worn by the employee. This event can be detected based on the increase in the pulse rate before and after the exception process. However, if there was much physical activity (movement) by the operator before the exception process detected from the images output by the register surveillance camera 9, the applicability rate is preferably calculated with consideration for such activity (a coefficient based on physical activity).

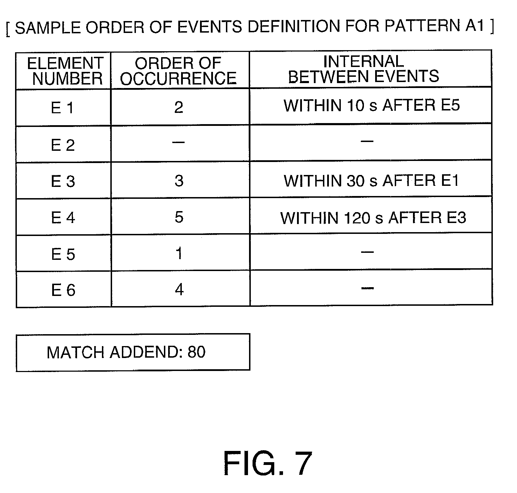

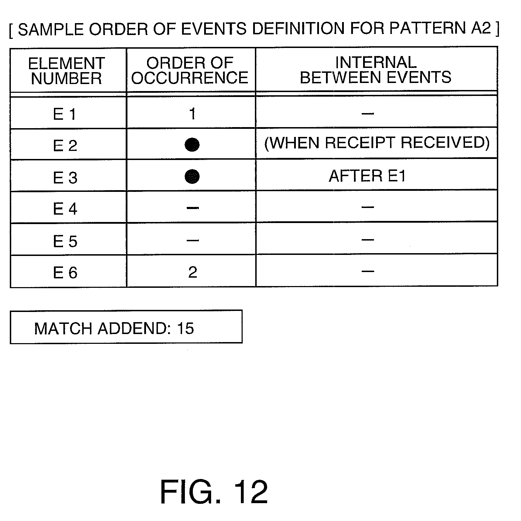

The order of events in a fraud pattern is described next with reference to FIG. 7. FIG. 7 shows a sample definition for a fraud pattern A1. The fraud pattern A1 in this example corresponds to fraud committed by an employee executing a cancellation process using a receipt that was not taken by a customer, pocketing cash equal to the sale total shown on the receipt, and then hiding the pocketed cash in a locker in the changing room. As shown in the figure, this fraud pattern can be defined using the order in which specific fraud elements (events) occurred and the time between each event (element). The order of events is defined in this example by the numbers shown, but a sequence number does not need to be defined for all fraud elements. More specifically, fraud elements that can occur in any particular order can also be included as indicated by the solid dots in FIG. 12. In addition, fraud elements with a blank in the order of occurrence column (indicated by a hyphen) are events that are not detected. The interval between events means a time limit. For example, detection of element number E1 (a POS exception key is pressed) within 10 seconds after detection of element number E5 (an employee looking around furtively) is interpreted to mean that those fraud elements occurred in the defined order of 1 then 2.

In addition, as shown at the bottom of the figure, a "match addend" can also be defined for each fraud pattern. This match addend is a value that is added to the total irregularity value when the order of events defined for the fraud pattern matches the order of events detected by the fraud detector 72. In this configuration the degree of fraud is calculated as the sum of the total irregularity value and the match addend.

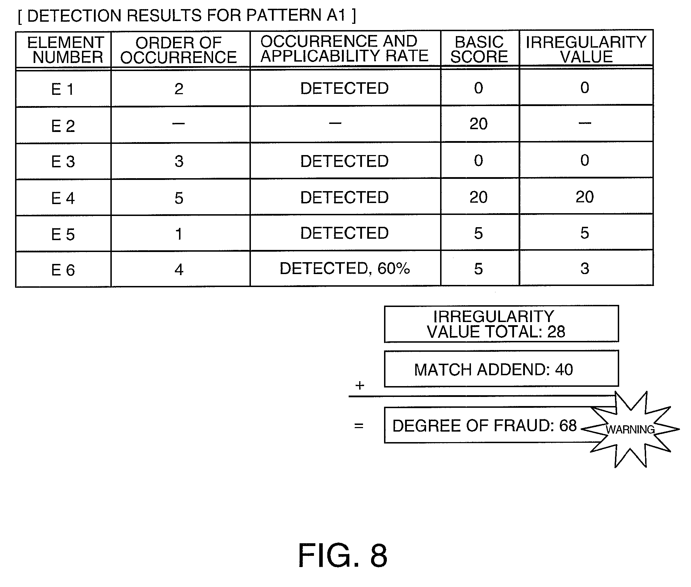

The result of detection of a fraud pattern (pattern A1) and the result of calculating the degree of fraud based on the detected fraud pattern is described next with reference to FIG. 8.
As described above the fraud detector 72 detects whether or not each fraud element occurred. The fraud detector 72 also detects the applicability rate for the fraud elements for which a weight coefficient is defined (see FIG. 6). For fraud elements that are detected but the applicability rate is not detected, the basic score equals the irregularity value. For fraud elements that are detected and the applicability rate is detected (such as element number E6 in the example in the figure), basic score x applicability rate = irregularity value. In addition, while not shown in this example, the irregularity value of fraud elements that are not detected is 0.
The example in the figure shows a case in which the order of events defined in the fraud pattern matches the order of events detected by the fraud detector 72. The degree of fraud is therefore calculated by adding the match addend to the sum of the irregularity values of all fraud elements defined in the pattern A1. Note that if the degree of fraud exceeds the specified value of 60 in this embodiment of the invention, a warning is issued by the operator warning unit 68 and administrator warning unit 75. A warning is therefore issued in the example shown in the figure because the degree of fraud exceeds the specified value of 60.

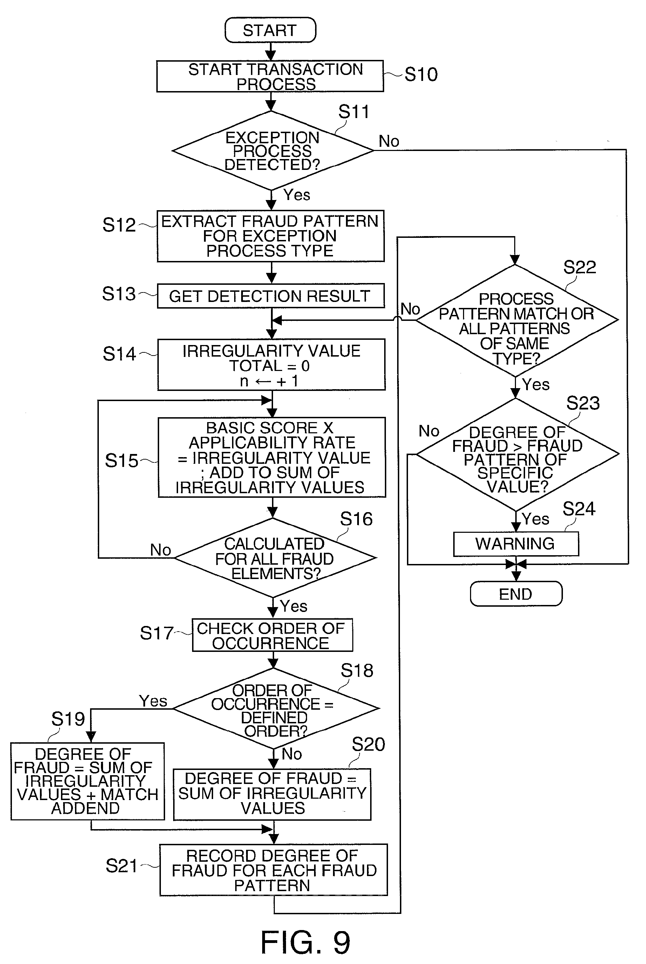

The degree of fraud recording process of the store surveillance system SY is described next with reference to the flow chart in FIG. 9.
When a transaction process is started (S10), the store surveillance system SY determines if the process is an exception process (S2, exception process detection unit 62). If an exception process is detected (S11 returns Yes), the fraud pattern corresponding to the type of exception process is extracted from the multiple fraud patterns stored in the fraud pattern storage unit 71 (S12, FIG. 3). The degree of fraud calculator 73 then acquires the detection result output by the fraud detector 72 (S13), resets the total irregularity value to 0 (S14), and adds the irregularity value (= basic score x applicability rate) of the extracted n-th fraud pattern to the total irregularity value (S15). Whether this calculation was completed for all fraud elements in the same fraud pattern is then determined (S16). If there is a fraud element that was not included in this calculation (S16 returns No), step S15 repeats.

If the total irregularity value has been calculated using all fraud elements (S16 returns Yes), the order of events is checked (S17). If the order of events defined for the fraud pattern matches the order of events detected by the fraud detector 72 (S18 returns Yes), the match addend is added to the irregularity value total to calculate the degree of fraud (S19). If the orders of events do not match (S18 returns No), the total irregularity value is returned as the degree of fraud (S20).
Note that steps S12 to S20 are executed by the degree of fraud calculator 73.

The degree of fraud is then stored in the fraud database 23 for the fraud pattern for which the degree of fraud was calculated (S21, degree of fraud recorder 74). Whether a pattern match was confirmed (the orders of events matched) or the degree of fraud was calculated for all fraud patterns related to the same exception process type is then determined (S22), and if either condition is not true (S22 returns No), control returns to step S14 and the degree of fraud calculation repeats. If step S22 returns yes, however, whether there is a fraud pattern with a degree of fraud exceeding the specified value is determined (S23). If there is a fraud pattern with a degree of fraud exceeding this specified value (S23 returns Yes), a warning is issued by the operator warning unit 68 or administrator warning unit 75 (S24). If there is not a fraud pattern with a degree of fraud exceeding this specified value (S23 returns No), or if an exception process was not invoked (S11, such as when a payment process is executed), a warning is not issued and the degree of fraud recording process ends.

Note that when an e-mail message is sent by the administrator warning unit 75 in step S24, the results of fraud element detection and the calculated degree of fraud are reported for each fraud pattern for which the calculated degree of fraud exceeds the specified value. In addition, when there are plural fraud patterns with a degree of fraud exceeding the specified value, a warning may be issued for only the fraud pattern with the highest degree of fraud.

As described above, because the store surveillance system SY according to the first embodiment of the invention calculates a degree of fraud by obtaining the sum of the irregularity values of one or more fraud elements detected by the fraud detector 72, and the result of this calculation is stored in the fraud database 23, the possibility of fraud can be determined from the stored records. As a result, fraudulent activity can be accurately detected even when the method of fraud is complex. In addition, the degree of fraud can be calculated more accurately because the degree of fraud calculation also considers the applicability rate of each fraud element and the order in which the fraud elements occurred. Yet further, because a warning is issued when the calculated degree of fraud exceeds a specified value, the employee or administrator can be appropriately notified.

Furthermore, because a fraud pattern is stored for each type of exception process in the fraud pattern storage unit 71, a more practical degree of fraud can be calculated using a fraud pattern suitable to the type of exception process. Yet further, because multiple fraud patterns can be stored for each type of exception process, numerous methods of fraudulent activity can be detected. In addition, because fraudulent activity generally involves an exception process, fraudulent activity can be efficiently detected by calculating and recording the degree of fraud only when an exception process is called as in this embodiment of the invention.

The operator warning unit 68 and administrator warning unit 75 in this embodiment of the invention may also change the format of the warning, such as where the warning is sent (warning recipient) and how the warning is issued (warning method), according to the calculated degree of fraud and the type of exception process detected.
Changing the warning recipient includes increasing or decreasing the number of addresses to which the e-mail is sent, and changing whether or not the warning is sent to the operator.
When the warning is audible, changing the warning method means, for example, changing the audio pattern, the volume, the number of times the warning is issued and the interval therebetween. When the warning is displayed, changing the warning method means changing the displayed content, the display color, the number of times displayed, or the interval between each display, for example. Changing the means whereby the warning is issued, such as audibly, by visual display, or by e-mail notification, is also included in changing the warning method.
Note, further, that the correlation between degree of fraud, the warning recipient and the warning method may also be changed by the user using an operating unit disposed to the receipt printer 2 or the store management server 12. This configuration enables issuing a warning using a format (warning recipient and warning method) suitable to the type of exception process. In addition, by changing the warning format according to the type of exception process, the operator or administrator can easily surmise the method of detected fraud from the format of the warning.

Yet further, the degree of fraud is calculated and recorded only when an exception process is called in the embodiment described above, but the degree of fraud may be calculated and recorded for all transaction processes. With such a configuration the recorded data can be used for employee training in system operation and for customer trend analysis.

The detection results and scanning results from the card reader 4, employee wristband 5, customer microphone 6a, employee microphone 7a, and receipt scanner 8 are sent to the store management server 12 through the receipt printer 2 in the embodiment described above, but may be sent through the in-house LAN 13 to the store management server 12. More specifically, all parts of the receipt printer 2 other than the printing unit 67 and operator warning unit 68 may be disposed in the store management server 12. Conversely, the parts of the store management server 12 may be disposed in the receipt printer 2.

The administrator warning unit 75 issues a warning using e-mail or a web application in the foregoing embodiment, but the warning may be issued using the methods of the operator warning unit 68, that is, by displaying a message on the display, audibly, by causing an LED to light steady or flash, or by causing a vibrator to vibrate, for example.

### * Embodiment 2

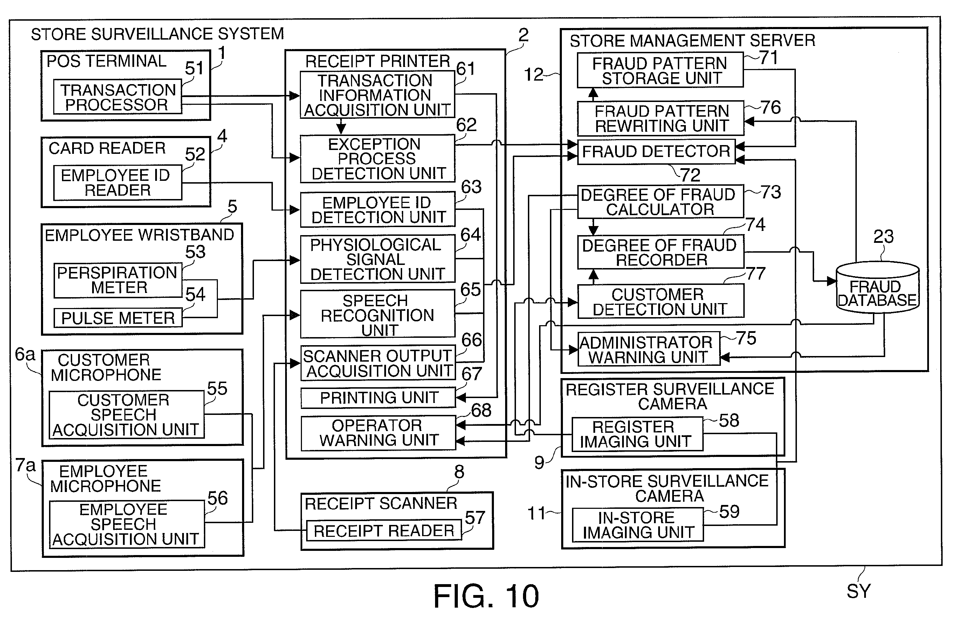

A second embodiment of the invention is described next with reference to FIG. 10 to FIG. 14. This embodiment of the invention is directed to detecting complicated fraudulent activity that occurs in a store and involves a customer as an accomplice. The differences between this and the first embodiment are described below. Note that like parts in this and the first embodiment are identified by like reference numerals, and further description thereof is omitted. In addition, variations involving the same parts as in the first embodiment are also applicable to this embodiment of the invention.

FIG. 10 is a function block diagram of a store surveillance system SY according to the second embodiment of the invention. The store management server 12 according to this embodiment of the invention differs from that in the first embodiment by the addition of a fraud pattern rewriting unit 76 and a customer detection unit 77.
The customer detection unit 77 detects a customer during a transaction process based on the images captured by the register imaging unit 58. More specifically, the customer detection unit 77 acquires the images, extracts frame differences and background differences, and extracts a motion region from the extracted information. A face detection process is then applied to the detected motion region, and if a face is detected the customer detection unit 77 determines that a customer is present. The degree of fraud recorder 74 then records customer identification information (customer information such as a customer ID, facial feature, and sound spectrogram) detected by the customer detection unit 77 linked to the detection result (in-store conditions data) from the fraud detector 72 (condition data detection unit) and the degree of fraud calculated by the degree of fraud calculator 73 in the fraud database 23 (see FIG. 4).

The fraud pattern rewriting unit 76 references the fraud database 23 to determined if the number of times the same customer requested an exception process exceeds a specified value. Because records are stored in this embodiment only when an exception process is detected, the number of exception processes equals the number of records. If this specified number of times is exceeded, the fraud pattern rewriting unit 76 increases the basic score for at least one of the fraud elements described in the fraud pattern. When the basic score is thus updated by the fraud pattern rewriting unit 76, the degree of fraud calculator 73 calculates the degree of fraud based on the fraud pattern after updating the basic score. This is described in further detail below.

The operator warning unit 68 and administrator warning unit 75 in this embodiment of the invention issue a warning when the cumulative total of the degrees of fraud recorded in the fraud database 23 for the same customer exceeds a specified value. A warning is issued in the first embodiment described above when the degree of fraud calculated by the degree of fraud calculator 73 exceeds a specified value. This embodiment differs by issuing a warning when the degree of fraud calculated for one transaction process exceeds a specified value, and when the cumulative total of the past degrees of fraud exceeds a specified value.

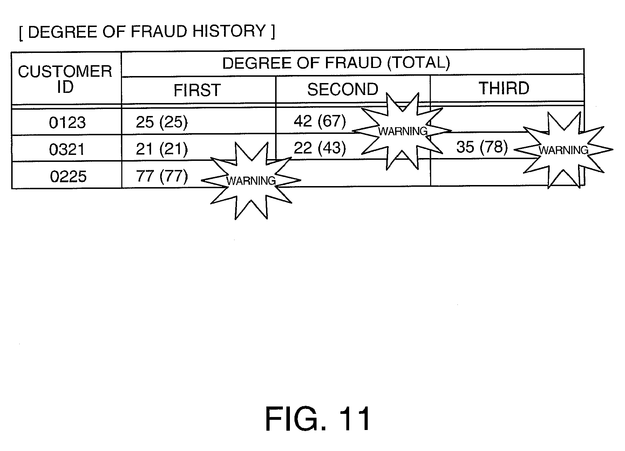

Whether or not to issue a warning based on the total of the degrees of fraud is described next with reference to FIG. 11. This figure shows a table recording a degree of fraud history for three customers. This table is a part of the information recorded in the fraud database 23 (see FIG. 4). In this example as shown in the table, the degree of fraud (the highest degree of fraud if a degree of fraud was calculated for plural fraud patterns) calculated for the first exception process requested by the customer of customer ID 0123 is 25, and the degree of fraud calculated during the second exception process is 42. Because the total of the calculated degrees of fraud exceeds a specified value (60 in this example) during this second exception process, a warning is issued.
For the customer of customer ID 0321 the total degree of fraud exceeds the specified value at the third exception process, and a warning is therefore issued at the third exception process.
For the customer of customer ID 0225 the calculated degree of fraud is 77 in the first exception process, the total is therefore also 77 and exceeds the specified value, and a warning is therefore issued at the first exception process.
Note that once a warning is issued for a customer based on the degree of fraud total, a warning is thereafter issued whenever an exception process executes for that customer. However, the user may also be enabled to reset the total when a warning is issued.

A specific value X for evaluating the degree of fraud calculated for one exception process, and a different specific value Y for evaluating the degree of fraud total, may also be used if the relationship between specific value X and specific value Y is X ≤ Y.
Furthermore, the customer ID is used as customer identification information in the example shown in the figure, but other customer information such as a facial feature, sound spectrogram, or other physiological information may be used.

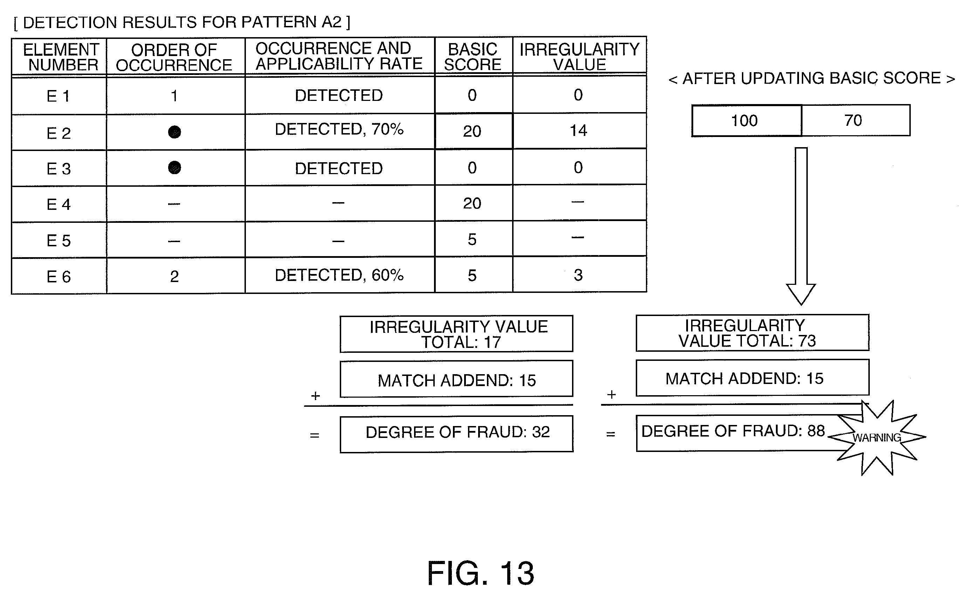

Rewriting a fraud pattern is described next with reference to FIG. 12 and FIG. 13. FIG. 12 shows an example of an order of event definition for a fraud pattern (pattern A2). This fraud pattern A2 corresponds to an act of fraud committed by an employee using a receipt that was not taken by a customer to take cash equal to the transaction total of the receipt and pass the cash to another customer that is an accomplice to the fraud. The match addend of pattern A2 is set to 15. Note that the solid dots in the order of events field means that the fraud element is detected but the order of occurrence is not defined. In addition, as defined in the interval between events field in element number E2, that element is detected based on images captured within a specified time before and after when a receipt is recognized in the images captured by the register surveillance camera 9.

FIG. 13 shows the results of detecting fraud pattern A2 and the result of calculating the degree of fraud for fraud pattern A2. When the detection results as shown in the detection and applicability rate column are obtained, the match addend of 15 is added to the total irregularity value of 17 to get a degree of fraud of 32. The first embodiment of the invention described above will therefore not issue a warning based on this fraud pattern.
However, if the number of records for this customer in the fraud database 23 exceeds the specified value, the basic score is updated for specific fraud elements. In this embodiment of the invention element number E2 is defined to be updated and the basic score is therefore rewritten from 20 to 100. There may be plural fraud elements that are to be updated, and whether a particular fraud element is updated may be defined separately for different fraud patterns. The updated basic score of each fraud element may also be applied uniformly to all fraud patterns, or it may be set separately for each fraud pattern. In the example shown in the figure rewriting the basic score changes the total irregularity value to 73. When the match addend of 15 is added, the degree of fraud therefore becomes 88 and exceeds the specified value, causing a warning to be issued.
Note that the basic score assigned to each fraud element is the same in pattern A1 shown in FIG. 8 and pattern A2 shown in FIG. 13, but a different basic score may be defined for each fraud pattern.

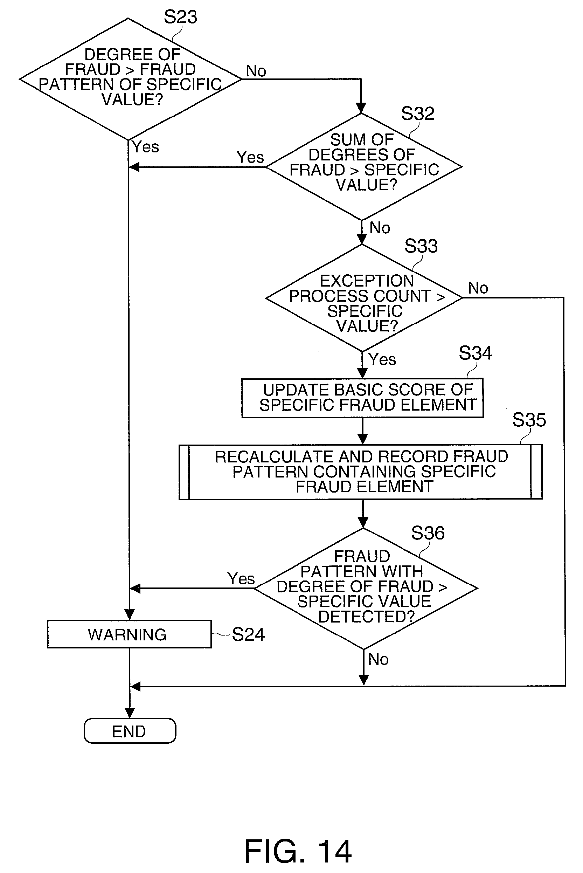

The degree of fraud recording process of the store surveillance system SY according to the second embodiment of the invention is described next with reference to the flow chart in FIG. 14. Note that the steps shown in this flow chart are executed following the steps in the flow chart shown in FIG. 9.
If a fraud pattern for which the calculated degree of fraud exceeds a specified value is found in step S23 in the flow chart in FIG. 9 (S23 returns Yes), a warning is issued by the operator warning unit 68 and administrator warning unit 75 (S24). However, if a fraud pattern for which the calculated degree of fraud exceeds a specified value is not found (S23 returns No), whether or not the total of past degrees of fraud exceeds a specified value is determined (S32), and if it does (S32 returns Yes), a warning is issued (S24).

If the total of past degrees of fraud does not exceed the specified value (S32 returns No), whether or not the number of times the customer requested an exception process exceeds a specified value is determined (S33). If it does (S33 returns Yes), the basic score of specific fraud elements is updated (S34). Note that steps S33 and S34 are executed by the fraud pattern rewriting unit 76. The degree of fraud is then recalculated and recorded for the fraud patterns containing the specific fraud elements (S35, degree of fraud calculator 73 and degree of fraud recorder 74). Note that step s35 is equivalent to steps S14 to S22 in the flow chart shown in FIG. 9.
If there is a fraud pattern for which the recalculated degree of fraud exceeds a specified value is thus found (S36 returns Yes), a warning is issued (S24). If there is no fraud pattern for which the recalculated degree of fraud exceeds the specific value (S36 returns No), or if the number of exception processes requested by the customer does not exceed the specified value (S33 returns No), a warning is not issued and the degree of fraud recording process ends.

Because the store surveillance system SY according to the second embodiment of the invention records the calculated degree of fraud together with customer identification information, the possibility that a customer is an accomplice to fraud can be estimated from the stored records. As a result, even complicated fraudulent activity that involves an accomplice can be easily detected. In addition, because the basic score is increased for at least one of the fraud elements recorded in the fraud pattern if a customer is determined from the number of records stored in the fraud database 23 to have requested more than a specified number of exception processes, undesirable customers that repeatedly commit fraud as an accomplice can be reliably detected. In addition, even if a warning has not been issued for a customer in the past, a warning will be issued because of the possibility of being an accomplice if the degree of fraud total exceeds a specified value. Storing such fraud records thus enables detecting methods of fraud (such as fraud involving an accomplice) that are difficult to detect from a single transaction process.

Note that the fraud database 23 described in the foregoing embodiments may also be shared between plural stores. This configuration enables detected fraudulent activity involving an accomplice that repeats a crime in plural stores.

The basic score of specific fraud elements is rewritten in the foregoing embodiment when the number of times an exception process is invoked exceeds a specified value, but the coefficient may be updated instead of the basic score. Further alternatively, instead of rewriting the basic score, coefficient, or weight of a specific fraud element, the match addend may be updated, an additional addend may be defined, or other method may be used. Yet further alternatively, the degree of fraud may be calculated by setting a plurality of threshold values and incrementally increasing the basic score, coefficient, match addend, or specific addend, or based on a specific equation (algorithm) that uses the exception process execution count as a parameter.

Note, further, that a warning is issued in the foregoing embodiment when the degree of fraud total exceeds a specified value, but a warning may be issued when the exception process execution count exceeds a specified value and the degree of fraud total exceeds a specified value. Further alternatively, a configuration enabling the user to set the conditions for issuing a warning, the conditions for rewriting the fraud pattern, and the items that are rewritten (such as the basic score, coefficient, match addend, and specific addend above) is also conceivable.

The fraud pattern is rewritten or the degree of fraud total is calculated when an exception process is invoked in the foregoing embodiment, but these actions may be limited to only when a specific type of exception process is called. More specifically, rewriting the fraud pattern or calculating the total degree of fraud may be limited to when the exception process detection unit 62 determines that a specific type of exception process was executed. By thus targeting the types of exception processes that have a strong possibility of being used to commit fraud involving an accomplice, fraud can be efficiently and effectively detected.

Furthermore, facial features or a sound spectrogram are used as customer information in the foregoing embodiments, but a fingerprint, hand print, retina, iris, blood vessels (vein pattern), ear shape, or other characteristic may be used. By thus using a physiological characteristic (static information), individuals can be easily identified without needing to monitor behavior.

The customer detection unit 77 in the foregoing embodiments detects customers from images captured by the register surveillance camera 9, but the presence of a customer may be detected using an infrared sensor. A configuration in which a wireless IC chip is embedded in member cards used by customers, and the presence of a customer is detected according to whether or not a card reader detects a member card is also conceivable. In this configuration the card reader is connected to the receipt printer 2 or in-house LAN 13.

The invention is described using two embodiments above, but the steps of the flow charts executed in these embodiments (the degree of fraud recording process of the store surveillance system SY) can also be rendered as a computer-executable program. Further alternatively, this program can be provided stored on a suitable recording medium such as a CD-ROM or flash memory, for example. More specifically, a program that causes a computer to function as the components of the store surveillance system SY, and a recording medium storing this program, are also within the scope of the accompanying claims.

Furthermore, the degree of fraud calculating device according to the invention is described in the foregoing embodiments as used to prevent fraud in a store, but can also be applied to systems developed for other applications (including employee education and management). Parts of the store management server 12 may also be rendered in the POS system or a WWW server. The configuration of the store surveillance system SY and the process steps are also not limited to the foregoing embodiments, and can be modified in many ways without departing from the scope of the accompanying claims.
Although the present invention has been described in connection with the preferred embodiments thereof with reference to the accompanying drawings, it is to be noted that various changes and modifications will be apparent to those skilled in the art. Such changes and modifications are to be understood as included within the scope of the present invention as defined by the appended claims, unless they depart therefrom.

## Claims

1. A degree of fraud calculating device being connectable to a POS terminal (1) configured to execute a transaction process in a store, the degree of fraud calculating device comprising:
a fraud pattern storage unit (71) for storing a fraud pattern, which sets a basic score that is a weight factor for one or more elements of fraud anticipated in the store;
a fraud detection unit (72) for detecting if one or more said fraud elements occur; and
a degree of fraud calculating unit (73) for calculating a degree of fraud by summing the basic scores of the fraud elements detected by the fraud detection unit (72) to have occurred.

2. The degree of fraud calculating device described in claim 1, wherein:
the fraud detection unit (72) is configured to detect an applicability rate for at least part of the fraud elements detected to have occurred; and
the degree of fraud calculating unit (73) is configured to calculate an irregularity value for each fraud element detected by the fraud detection unit by multiplying the basic score of the fraud element by the applicability rate, and to calculate the degree of fraud by summing the irregularity values.

3. The degree of fraud calculating device described in claim 2, wherein:
the fraud pattern defines an order of occurrence for at least part of the one or more fraud elements;
the fraud detection unit (72) is configured to detect the order of occurrence of the fraud elements; and
the degree of fraud calculating unit (73) is configured to calculate the degree of fraud by adding a specific match addend to the total of the irregularity values when the order of occurrence defined in the fraud pattern matches the order of occurrence detected by the fraud detection unit (72).

4. The degree of fraud calculating device described in at least one of claims 1 to 3, further comprising:
a warning unit (68; 75) for issuing a warning when the degree of fraud calculated by the degree of fraud calculating unit (73) exceeds a specified value.

5. The degree of fraud calculating device described in claim 4, wherein:
the fraud pattern storage unit (71) is configured to store a plurality of fraud patterns;
the degree of fraud calculating unit (73) is configured to calculate a degree of fraud for plural fraud patterns stored in the fraud pattern storage unit (71); and
the warning unit (68; 75) is configured to issue a warning when there is at least one fraud pattern for which the degree of fraud calculated by the degree of fraud calculating unit (73) exceeds a specified value.

6. The degree of fraud calculating device described in at least one of claims 1 to 5, further comprising:
an exception process detection unit (62) for detecting execution of an exception process, which is a type of transaction process, by a transaction processing unit (51) of the POS terminal (1) based on transaction information from the POS terminal (1) or POS terminal operating information from a data hook driver (42);
wherein the degree of fraud calculating unit (73) is configured to function conditionally upon the exception process detection unit (62) detecting an exception process.

7. The degree of fraud calculating device described in claim 6, wherein:
the exception process includes at least one process selected from a group of processes including:
- an interrupt process for canceling input data during transaction processing by the transaction processing unit (51),
- a cancellation process for canceling a transaction after the transaction process was completed,
- a return process for returning a product,
- a markdown process for marking down a product price,
- a discount process for discounting a product by a percentage,
- a change process for making cash change,
- an inspection process for comparing cash in the cash drawer with sales data,
- a payment/refund process for paying or returning money, and
- a reissue process for re-issuing a receipt.

8. The degree of fraud calculating device described in claim 6 or 7, wherein:
the exception process detection unit (62) is configured to detect the type of exception process;
the fraud pattern storage unit (71) is configured to store a fraud pattern for each exception process type; and
the degree of fraud calculating unit (73) is configured to extract the fraud pattern corresponding to the exception process type detected by the exception process detection unit (62) from the fraud pattern storage unit (71), and to calculate a degree of fraud on the basis of the extracted fraud pattern.

9. The degree of fraud calculating device described in claim 8, wherein:
the warning unit (68; 75) is configured to change at least one of the warning recipient and the warning method according to the type of exception process detected by the exception process detection unit (62).

10. The degree of fraud calculating device described in at least one of claims 1 to 9, further comprising:
a degree of fraud recording unit (74) for recording the results calculated by the degree of fraud calculating unit (73) in a database.

11. A control method of a degree of fraud calculating device that is connectable to a POS terminal (1) for executing a transaction process in a store, and has an internal or external fraud pattern storage unit (71) for storing a fraud pattern, which sets a basic score that is a weight factor for one or more elements of fraud anticipated in the store,
the control method comprising as steps executed by the degree of fraud calculating device:
a fraud detection step of detecting if one or more said fraud elements occur; and
a degree of fraud calculating step of calculating a degree of fraud by summing the basic scores of the fraud elements detected to have occurred.

12. The control method of a degree of fraud calculating device described in claim 11, wherein:
an applicability rate for at least part of the fraud elements detected to have occurred is detected in the fraud detection step; and
an irregularity value for each fraud element detected in the fraud detection step is calculated in the degree of fraud calculating step by multiplying the basic score of the fraud element by the applicability rate, and the degree of fraud is calculated in the degree of fraud calculating step by summing the irregularity values.

13. The control method of a degree of fraud calculating device described in claim 12, wherein:
the fraud pattern defines an order of occurrence for at least part of the one or more fraud elements;
the order of occurrence of the fraud elements is detected in the fraud detection step; and
the degree of fraud is calculated in the degree of fraud calculating step by adding a specific match addend to the total of the irregularity values when the order of occurrence defined in the fraud pattern matches the order of occurrence detected in the fraud detection step.

14. A store surveillance system comprising:
a POS terminal (1) for executing a transaction process in a store; and
a degree of fraud calculating device according to at least one of claims 1 to 10 that is connected to the POS terminal (1).

15. The store surveillance system described in claim 14, wherein:
the degree of fraud calculating device includes
a receipt printer (2) for detecting if an exception process is executed and for issuing a receipt based on transaction information from the POS terminal (1) or POS terminal operating information from a data hook driver (42), and
a store management server (12) that is connected to the receipt printer (2) and is configured to calculate a degree of fraud based on detection of an exception process.

16. The store surveillance system described in claim 14 or 15, wherein:
the store management server (12) comprises:
the fraud pattern storage unit (71),
the fraud detection unit (72), and
the degree of fraud calculating unit (73).

17. The store surveillance system described in claim 16, wherein:
the receipt printer (2) comprises the exception process detection unit (62) for detecting execution of an exception process, which is a type of transaction process, by a transaction processing unit (51) of the POS terminal (1) based on transaction information or operating information; and
the degree of fraud calculating unit (73) of the store management server (12) is configured to function conditionally upon the exception process detection unit (62) detecting an exception process.
